(19) Europäisches Patentamt
European Patent Office
Office européen des brevets

(11) **EP 4 406 925 A1**

(12) **EUROPÄISCHE PATENTANMELDUNG**

(43) Veröffentlichungstag:
**31.07.2024 Patentblatt 2024/31**

(21) Anmeldenummer: 23176136.2

(22) Anmeldetag: **30.05.2023**

(51) Internationale Patentklassifikation (IPC):
**C04B 20/00** (2006.01)    **C04B 26/02** (2006.01)

(52) Gemeinsame Patentklassifikation (CPC):
(C-Sets verfügbar)
**C04B 26/02; C04B 20/0076;** C04B 2111/00482

(Forts.)

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(30) Priorität: **27.01.2023   US 202363441486 P**

(71) Anmelder: **STO Corp.
Atlanta, GA 30331 (US)**

(72) Erfinder:
• **LeFevre, Richard
Kennesaw, 30152 (US)**
• **Hartley, Daniel
Peachtree City, 30269 (US)**

(74) Vertreter: **Gottschalk, Matthias
Gottschalk Maiwald
Patentanwalts- und Rechtsanwalts- (Schweiz)
GmbH
Florastrasse 14
8008 Zürich (CH)**

(54) **PUTZMASSE, PUTZSCHICHT SOWIE PUTZSYSTEM**

(57)     Die Erfindung betrifft eine Putzmasse zur Ausbildung einer ein- oder mehrlagigen Putzschicht, insbesondere einer Armierungsschicht, enthaltend
- mindestens ein Polymerbindemittel,
- Füllstoffe,
- Additive und
- Wasser.

Erfindungsgemäß liegen die Füllstoffe in einer mindestens trimodalen Teilchengrößenverteilung vor, umfassend
- mindestens einen Grobfüllstoff mit einer mittleren Teilchengröße D50 von 500-2000 $\mu$m, vorzugsweise 800-1800 $\mu$m, weiterhin vorzugsweise 1000-1600 $\mu$m,
- mindestens einen Feinfüllstoff mit einer mittleren Teilchengröße D50 von 100-500 $\mu$m, vorzugsweise 150-450 $\mu$m, weiterhin vorzugsweise 180-400 $\mu$m und
- mindestens einen Feinstfüllstoff mit einer mittleren Teilchengröße D50 von 5-99 $\mu$m, vorzugsweise 10-80 $\mu$m, weiterhin vorzugsweise 15-75 $\mu$m.

Die Erfindung betrifft ferner eine ein- oder mehrlagige Putzschicht sowie ein Putzsystem.

(52) Gemeinsame Patentklassifikation (CPC): (Forts.)

C-Sets
**C04B 20/0076, C04B 14/06, C04B 14/26,
C04B 14/285;
C04B 26/02, C04B 20/0076**

**Beschreibung**

Die Erfindung betrifft eine Putzmasse zur Ausbildung einer ein- oder mehrlagigen Putzschicht, insbesondere einer Armierungsschicht. Das heißt, dass die Putzschicht bevorzugt mit einem Armierungsgewebe bewehrt ist. Auf die ein- oder mehrlagige Putzschicht kann eine weitere Putzschicht als Oberputz aufgebracht werden. Alternativ oder ergänzend kann die ein- oder mehrlagige Putzschicht auf einer als Unterputz dienende weitere Putzschicht angeordnet werden.

Des Weiteren betrifft die Erfindung eine aus einer erfindungsgemäßen Putzmasse ausgebildete ein- oder mehrlagige Putzschicht sowie ein Putzsystem, das eine aus der erfindungsgemäßen Putzmasse ausgebildete ein- oder mehrlagige Putzschicht umfasst.

Stand der Technik

Aus der DE 60 2004 010 235 T2 ist ein Putz bekannt, der einen mineralischen Füllstoff mit einem Durchmesser d50 zwischen 5 und 20 Mikrometer sowie einen hydrophobierten expandierten Perlit mit einem Durchmesser d50 zwischen 20 und 100 Mikrometer enthält.

Bei Putzschichten im Außenbereich, insbesondere wenn sie auf einer Dämmschicht aufgebracht sind, tritt häufig das Problem von Spechtlöchern auf. Das heißt, dass Spechte oder andere Vögel bei der Futter- oder Nestplatzsuche die Putzschicht aufklopfen, da sie die raue Oberfläche der Putzschicht an Baumrinde und der hohle Klang beim Klopfen an weiches, vermodertes Holz erinnert. Dadurch entstehen Schäden am Putz- bzw. Wärmedämmverbundsystem, die nicht nur eine optische Beeinträchtigung, sondern auch eine Beeinträchtigung der Funktion darstellen.

Zur Vermeidung solcher Schäden kann die Putzschicht bzw. der Putz dicker ausgebildet werden, so dass sie von einem Vogel, insbesondere Specht, nicht mehr aufgeklopft werden kann. Mit der Dicke des Putzes steigen jedoch auch die Kosten. Alternativ oder ergänzend kann die Putzoberfläche geglättet werden, so dass sich Vögel hieran nicht mehr festkrallen können. Dieser Lösungsansatz schränkt jedoch den Gestaltungsfreiraum ein. Darüber hinaus wurde der Einsatz eines besonders festen Armierungsgewebes, dem sogenannten Panzergewebe, in der Armierungsschicht vorgeschlagen. Doch auch dieses hält den Schnabelhieben von Spechten nicht immer stand.

Die vorliegende Erfindung ist daher mit der Aufgabe befasst, das Problem der Spechtlöcher bei Putzschichten bzw. Putzen im Außenbereich zu verhindern oder zumindest zu verringern.

Zur Lösung der Aufgabe wird die Putzmasse mit den Merkmalen des Anspruchs 1 vorgeschlagen. Vorteilhafte Weiterbildungen der Erfindung sind den Unteransprüchen zu entnehmen. Darüber hinaus werden eine ein- oder mehrlagige Putzschicht sowie ein Putzsystem angegeben.

Offenbarung der Erfindung

Vorgeschlagen wird eine Putzmasse zur Ausbildung einer ein- oder mehrlagigen Putzschicht, insbesondere einer Armierungsschicht, enthaltend

- mindestens ein Polymerbindemittel,
- Füllstoffe,
- Additive und
- Wasser.

Erfindungsgemäß liegen die Füllstoffe in einer mindestens trimodalen Teilchengrößenverteilung vor, umfassend

- mindestens einen Grobfüllstoff mit einer mittleren Teilchengröße D50 von 500-2000 $\mu$m, vorzugsweise 800-1800 $\mu$m, weiterhin vorzugsweise 1000-1600 $\mu$m,
- mindestens einen Feinfüllstoff mit einer mittleren Teilchengröße D50 von 100-500 $\mu$m, vorzugsweise 150-450 $\mu$m, weiterhin vorzugsweise 180-400 $\mu$m und
- mindestens einen Feinstfüllstoff mit einer mittleren Teilchengröße D50 von 5-99 $\mu$m, vorzugsweise 10-80 $\mu$m, weiterhin vorzugsweise 15-75 $\mu$m.

Der D50-Wert, der auch Halbwertskorngröße oder Medianwert genannt wird, gibt die mittlere Partikelgröße eines Füllstoffs an, so dass der Anteil der Partikel, die größer als der D50-Wert sind, gleich dem Anteil der Partikel ist, die kleiner als der D50-Wert sind. Die Bestimmung dieser Werte erfolgt bevorzugt nach DIN ISO 9276-1:2004-09 (Darstellung der Ergebnisse von Partikelgrößenanalysen - Teil 1: grafische Darstellung) und ISO 9276-2:2014-05 (Darstellung der Ergebnisse von Partikelgrößenanalysen - Teil 2: Berechnungen von mittleren Partikelgrößen/- durchmessern und Momenten aus Partikelgrößenverteilungen). Dabei kann der Mastersizer 3000 der Firma Malvern Instruments Limited als Instrument zur Größenbestimmung eingesetzt werden. In der Regel können diese Werte aber auch einfach einem technischen Datenblatt entnommen werden.

Die vorgeschlagene Füllstoffkombination mit den angegebenen D50-Werten ermöglicht eine besonders dichte Packung der Füllstoffe, da sich die Feinfüllstoffe in die verbleibenden Räume zwischen den Grobfüllstoffen und die Feinstfüllstoffe in die verbleibenden Räume zwischen den Grobfüllstoffen und den Feinfüllstoffen setzen. Die dichte Packung wiederum führt zu einer erhöhten Elastizität und damit zu einer erhöhten Widerstandsfähigkeit einer aus der Putzmasse ausgebildeten Putzschicht gegen Schnabelhiebe. Denn die Schnabelhiebe werden dank der Elastizität der Putzschicht zu einem großen Teil absorbiert.

Bei der Bestimmung der mittleren Teilchengröße D50 der unterschiedlichen Größenfraktionen geht man idealerweise von der Fraktion der Grobfüllstoffe aus. Denn diese bilden innerhalb der Packung eine Art Grundgerüst aus. In diesem Grundgerüst verbleiben zwischen den Grobfüllstoffen Räume, deren Größe sich berechnen lässt, so dass hiernach die Größe der Feinfüllstoffe festlegbar ist. Dies gilt analog für die Räume, die zwischen den Grob- und den Feinfüllstoffen verbleiben und mit Feinstfüllstoffen gefüllt werden sollen.

Bei der Berechnung der verbleibenden Räume zwischen den Füllstoffen kann man vereinfacht die Teilchen einer Größenfraktion als Kugeln gleicher Größe betrachten, wobei die Größe dem jeweiligen D50-Wert entspricht. In der Realität weicht die Form der Teilchen von der Kugelform ab. Zudem haben nicht alle Füllstoffe einer Größenfraktion die gleiche Größe, sondern liegen ebenfalls in einer Größenverteilung vor. All dies kann jedoch bei der Berechnung der verbleibenden Räume bzw. bei der Bestimmung der mittleren Teilchengröße D50 der einzelnen Größenfraktionen vernachlässigt werden.

In einer möglichst dichten Kugelpackung bilden sich Tetraederlücken und Oktaederlücken aus. In eine Oktaederlücke zwischen zwei Teilchen/Kugeln eines Grobfüllstoffs mit dem Durchmesser D passt eine kleinere Kugel mit einem Durchmesser d, wenn d im Bereich 0,155*D und 0,414*D liegt. Maßgebender sind jedoch die Tetraederlücken. In eine Tetraederlücke zwischen zwei Teilchen/Kugeln eines Grobfüllstoffs mit dem Durchmesser D passt eine kleinere Kugel mit einem Durchmesser d, wenn d im Bereich 0,225*D und 0,291*D liegt.

Verallgemeinernd lässt sich sagen, dass der D50-Wert des Feinfüllstoffs zwischen 0,155 und 0,414, vorzugsweise zwischen 0,225 und 0,414, weiterhin vorzugsweise zwischen 0,225 und 0,291, des D50-Werts des Grobfüllstoffs liegen sollte, um eine möglichst dichte Packung zu erhalten.

Der D50-Wert des Feinstfüllstoffs sollte dabei um den Faktor 2, vorzugsweise um den Faktor 3, weiterhin vorzugsweise um den Faktor 4 kleiner als der D50-Wert des Feinfüllstoffs gewählt sein, so dass der Feinstfüllstoff die zwischen dem Grobfüllstoff und dem Feinfüllstoff verbleibenden Lücken bzw. Räume füllt.

Sowohl das Mengen- als auch das Volumenverhältnis des mindestens einen Grobfüllstoffs (GFS) zum mindestens einen Feinfüllstoff (FFS) und zum mindestens einen Feinstfüllstoff (FstFS) beträgt idealweise

$$GFS:FFS:FstFS = 1:1,5\text{-}2,5:2\text{-}4$$

Im Ergebnis verbleibt aufgrund der dichten Packung der Füllstoffe ein sehr geringes Restvolumen, das mit Polymerbindemittel gefüllt werden muss. Die dichte Packung der Füllstoffe beeinflusst somit die Pigmentvolumenkonzentration PVK der Putzmasse bzw. einer hieraus ausgebildeten Putzschicht, wobei die PVK das Verhältnis des Volumens der enthaltenen Pigmente und Füllstoffe zum Gesamtvolumen an nichtflüchtigen Bestandteilen, in der Regel Pigmente, Füllstoffe und Bindemittel bezeichnet. Die PVK ist demnach eine wesentliche Größe zur Charakterisierung des Volumenverhältnisses von Pigment und Füllstoff zum Bindemittel. Je niedriger die PVK ist, desto höher ist in der Regel der Bindemittelanteil.

Für die Bestimmung der PVK kann Rückgriff auf die DIN EN ISO 4618:2015-01 genommen werden. Zur Berechnung der PVK kann die folgende Formel verwendet werden:

$$PVK\ [\%] = (\sum V_{Pigmente} + \sum V_{Füllstoffe} / \sum V_{Pigmente} + \sum V_{Füllstoffe} + \sum V_{Bindemittel})\ x\ 100$$

Eine weitere wesentliche Größe stellt die kritische Pigmentvolumenkonzentration KPVK dar. In der DIN EN ISO 4618:2015 wird die KPVK als ein bestimmter Wert der PVK definiert, bei dem die Hohlräume zwischen den sich berührenden Feststoffteilchen einer Beschichtung gerade noch mit Bindemittel gefüllt sind. Oberhalb der KPVK (überkritischer Bereich) sind demnach nicht alle Hohlräume mit Bindemittel gefüllt. Unterhalb der KPVK (unterkritischer Bereich), sind alle Hohlräume mit Bindemittel gefüllt.

Die üblicherweise in einer Putzmasse enthaltene grobe Körnung führt zur Ausbildung von Lufteinschlüssen, die nicht gefüllt sind, so dass die PVK einer aus einer herkömmlichen Putzmasse hergestellten Putzschicht stets im überkritischen Bereich anzufinden ist. Bei Putzmassen bzw. Putzschichten sind daher Angaben zur PVK in der Regel entbehrlich. Die Angabe der PVK ergibt erst einen Sinn, wenn die Beschichtung feinteilige Pigmente und Füllstoffe enthält, so dass hieraus eine dichte Packung der Pigmente und Füllstoffe resultiert. Dies ist der Fall bei Farben und Lacken sowie der erfindungsgemäßen Putzmasse.

Die dichte Packung der Füllstoffe in der erfindungsgemäßen Putzmasse führt zu kleinen Lücken bzw. Hohlräumen und damit zu einem geringen Bindemittelbedarf zum Füllen der Lücken bzw. Hohlräume. Das heißt, dass die KPVK zu einem höheren Wert verschoben wird. Durch das Verschieben der KPVK zu einem höheren Wert, wird eine PVK erzielt, die im unterkritischen Bereich liegt, vorzugsweise zwischen 40 und 80%, weiterhin vorzugsweise zwischen 45 und 75%, besonders bevorzugt zwischen 50 und 70%. Das heißt, dass sämtliche Lücken und Hohlräume mit Bindemittel gefüllt sind. Die Putzmasse bzw. die hieraus hergestellte Putzschicht ist demnach bindemittelreich, obwohl nur eine geringe Menge an Bindemittel enthalten ist, da die dichte Packung der Füllstoffe den Bindemittelbedarf senkt.

Durch die vorgeschlagene Verwendung von mindestens einem Polymerbindemittel, sind alle Lücken und Hohlräume mit einem vergleichsweise elastischen Bindemittel gefüllt, insbesondere im Vergleich zu mineralischen oder zementösen Bindemitteln. Im Ergebnis wird dadurch die Elastizität der aus einer erfindungsgemäßen Putzmasse ausgebildeten Putzschicht weiter gesteigert. Das heißt, dass Schnabelhiebe noch besser absorbiert werden können.

Bevorzugt sind bezogen auf das Gesamtgewicht der Ausgangsstoffe 3-15 Gew.-%, vorzugsweise 4-12 Gew.-%, weiterhin vorzugsweise 4-10 Gew.-% des mindestens einen Polymerbindemittels enthalten. Der Bindemittelanteil ist demnach vergleichsweise gering. Dank der dichten Packung der Füllstoffe liegt die PVK jedoch im unterkritischen Bereich.

Des Weiteren bevorzugt weist das mindestens eine Polymerbindemittel eine Mindestfilmtemperatur von 0 bis 20°C und/oder eine Glasübergangstemperatur von 5 bis 15°C auf. Das Polymerbindemittel ist demnach vergleichsweise elastisch.

Bevorzugt ist bzw. sind ein Polymerbindemittel auf Basis von Vinylacetat/EthylenCopolymeren, Copolymeren auf Basis von Vinylaromaten, insbesondere Styrol, und Acrylaten und/oder Homo- oder Copolymeren auf Basis von Reinacrylaten, insbesondere auf Basis von Styrolacrylatcopolymeren, und/oder Reinacrylate umfassend Homo- oder Copolymere von Acrylaten und/oder Methacrylaten, gegebenenfalls mit Acryl- und/oder Methacrylsäure als Comonomerbaustein, enthalten. Besonders bevorzugt werden Homo- oder Copolymere auf Basis von Reinacrylaten und/oder auf Basis von Styrolacrylatcopolymeren.

Erfindungsgemäß sind jeweils bezogen auf das Gesamtgewicht der Ausgangsstoffe

- 5-20 Gew.-%, vorzugsweise 6-18 Gew.-%, weiterhin vorzugsweise 7-15 Gew.-% des mindestens einen Grobfüllstoffs,
- 15-30 Gew.-%, vorzugsweise 16-28 Gew.-%, weiterhin vorzugsweise 18-25 Gew.-% des mindestens einen Feinfüllstoffs und
- 20-50 Gew.-%, vorzugsweise 25-45 Gew.-%, weiterhin vorzugsweise 28-40 Gew.-% des mindestens einen Feinstfüllstoffs enthalten.

Die angegebenen Gewichtsanteile führen bei den angegebenen Teilchengrößen der einzelnen Größenfraktionen zu einer sehr dichten Packung der Füllstoffe.

Bevorzugt enthalten die Füllstoffe mindestens einen silikatischen und/oder karbonatischen Füllstoff, wie beispielsweise Quarz, Cristobalit, Calcit, Marmor und/oder Dolomit, wobei silikatische Füllstoffe in der Regel härter als karbonatische Füllstoffe sind, so dass je nach Größenfraktion die eine oder andere Füllstoffart oder eine Mischung aus beiden Füllstoffarten bevorzugt wird. Die Füllstoffe einer Größenfraktion können demnach auch unterschiedliche Füllstoffarten bzw. eine Füllstoffmischung umfassen.

Der mindestens eine Feinfüllstoff weist vorzugsweise eine Mohs-Härte von mindestens 5, weiterhin vorzugsweise von mindestens 6, besonders bevorzugt von mindestens 6,5 auf. Das heißt, dass er vergleichsweise hart ist. Dadurch minimiert sich die Gefahr, dass der Feinfüllstoff zwischen den Teilchen der größeren Füllstofffraktion zerrieben bzw. zermahlen wird. Der mindestens eine Feinfüllstoff ist demnach bevorzugt ein silikatischer Füllstoff, beispielsweise Quarz oder Cristobalit.

Ferner wird vorgeschlagen, dass ein erster Grobfüllstoff mit einer Mohs-Härte von maximal 5, vorzugsweise von maximal 4, weiterhin vorzugsweise von maximal 3, sowie ein zweiter Grobfüllstoff mit einer Mohs-Härte von mindestens 5, vorzugsweise von mindestens 6, weiterhin vorzugsweise von mindestens 6,5 enthalten sind, wobei der Gewichtsanteil des ersten Grobfüllstoffs größer als der Gewichtsanteil des zweiten Grobfüllstoffs ist. Das heißt, dass die Grobfraktion eine Mischung unterschiedlicher Grobfüllstoffe enthält, die sich zumindest hinsichtlich ihrer Mohs-Härte unterscheiden. Dabei überwiegt in der Grobfraktion der Gewichtsanteil der "weichen" Füllstoffe. Auch dies trägt dazu bei, dass die Feinfüllstoffe zwischen den Grobfüllstoffen nicht zerrieben bzw. zermahlen werden, so dass die Feinfüllstoffe als robuste Abstandshalter zwischen den Grobfüllstoffen wirken können.

Des Weiteren wird vorgeschlagen, dass ein erster Feinstfüllstoff mit einer Mohs-Härte von maximal 5, vorzugsweise von maximal 4, weiterhin vorzugsweise von maximal 3, sowie ein zweiter Feinstfüllstoff mit einer Mohs-Härte von mindestens 5, vorzugsweise von mindestens 6, weiterhin vorzugsweise von mindestens 6,5 enthalten sind, wobei der Gewichtsanteil des ersten Feinstfüllstoffs kleiner als der Gewichtsanteil des zweiten Feinstfüllstoffs ist. Es liegt demnach analog zu den Grobfüllstoffen eine Feinstfüllstoffmischung vor. Bei den Feinstfüllstoffen verhält es sich jedoch umgekehrt, das heißt, es sind mehr harte als weiche Füllstoffe enthalten.

Besonders bevorzugt enthalten die Feinstfüllstoffe mindestens einen Feinstfüllstoff mit einer Mohs-Härte von 1 oder 2. Der Gewichtsanteil dieses sehr weichen Feinstfüllstoffs beträgt vorzugsweise mindestens 5 Gew.-%, weiterhin vorzugsweise mindestens 10 Gew.-%, bezogen auf das Gesamtgewicht der Feinstfüllstoffe. Die Teilchen des sehr weichen Feinstfüllstoffs bewirken eine Art Schmierung zwischen den größeren Teilchen der übrigen Füllstofffraktionen. Im Unterschied zu den Teilchen des mindestens einen Feinfüllstoffs können die Teilchen des Feinstfüllstoffs ruhig zerrieben bzw. zermahlen werden.

Alternativ oder ergänzend zu den bereits genannten silikatischen und/oder karbonatischen Füllstoffen kann der mindestens eine Feinstfüllstoff oxidische und/oder hydroxydische Feinstfüllstoffe, beispielsweise Aluminiumhydroxid, enthalten. Durch Zugabe von Aluminiumhydroxid als Feinstfüllstoff ist gleichzeitig ein Flammschutzmittel enthalten, so dass ggf. auf ein separates Flammschutzmittel als Additiv verzichtet werden kann.

Als Additive können in der vorgeschlagenen Putzmasse die üblichen Additive enthalten sein, beispielsweise Konservierungsmittel, Fasern, Netz-/Dispergiermittel, Entschäumer, Hydrophobierungsmittel, Beschleuniger, Filmbildehilfsmittel, Farbstoffe und/oder Färbungsmittel. Als besonders vorteilhaft hat sich die Zugabe von Carbonanotubes erwiesen. Diese können bis zu einem Gewichtsanteil von 1 Gew.-% bezogen enthalten sein.

Des Weiteren bevorzugt enthalten die Additive mindestens einen Vernetzer, vorzugsweise einen Vernetzer auf Silan-Basis, insbesondere auf Polysiloxan-Basis. Der Vernetzer stabilisiert das Polymerbindemittel. Der Gewichtsanteil des Vernetzers kann ebenfalls bis zu 1 Gew.-% bezogen auf das Gesamtgewicht der Ausgangsstoffe betragen.

Bevorzugt sind in einer erfindungsgemäßen Putzmasse

| | |
|---|---|
| 3,0-15,0 Gew.-% | mindestens eines Polymerbindemittels (Feststoff) |
| 5,0-20,0 Gew.-% | mindestens eines Grobfüllstoffs |
| 15,0-30,0 Gew.-% | mindestens eines Feinfüllstoffs |
| 20,0-50,0 Gew.-% | mindestens eines Feinstfüllstoffs |
| 10,0-30,0 Gew.-% | Wasser |
| 0-1,0 Gew.-% | Vernetzer |
| 0,1-10,0 Gew.-% | weitere Additive |

jeweils bezogen auf das Gesamtgewicht der Ausgangsstoffe enthalten.

Eine hieraus hergestellte Putzschicht, insbesondere Armierungsschicht, weist eine gewisse Elastizität auf, so dass sie in der Lage ist Schnabelhiebe eines Vogels, insbesondere eines Spechts, zumindest teilweise zu absorbieren. Die Putzschicht wird demnach durch die Schnabelhiebe weniger stark oder gar nicht beschädigt. Insbesondere kann sie nicht mehr durchdrungen werden. Das heißt, dass in dieser Putzschicht keine Spechtlöcher entstehen, über die Feuchtigkeit eindringen könnte. Die Funktion der Putzschicht bleibt somit erhalten.

Aufgrund dieser Vorteile, die mit Hilfe einer erfindungsgemäßen Putzmasse erzielbar sind, wird ferner eine ein- oder mehrlagige Putzschicht, insbesondere Armierungsschicht, aus einer erfindungsgemäßen Putzmasse vorgeschlagen.

Besonders deutlich treten die Vorteile einer aus einer erfindungsgemäßen Putzmasse ausgebildeten ein- oder mehrlagigen Putzschicht hervor, wenn sie in einem Putzsystem zusammen mit weiteren Putzschichten eingesetzt wird. Darüber hinaus wird daher ein Putzsystem vorgeschlagen, das eine aus einer erfindungsgemäßen Putzmasse ausgebildete ein- oder mehrlagige Putzschicht, insbesondere Armierungsschicht, sowie mindestens eine weitere Putzschicht, vorzugsweise eine Oberputzschicht und/oder eine weitere Armierungsschicht umfasst, wobei die weitere Armierungsschicht zementgebunden ist. Das heißt, dass das Putzsystem zwei Armierungsschichten umfassen kann, eine organisch gebundene und eine zementgebundene. Die organisch gebundene Armierungsschicht weist eine gewisse Elastizität auf, um Spechtlöchern entgegenzuwirken. Die zementgebundene Armierungsschicht ist demgegenüber steif und verleiht dem Putzsystem eine höhere Festigkeit.

Die aus einer erfindungsgemäßen Putzmasse ausgebildete Putzschicht ist dabei bevorzugt zwischen einer zementgebundenen, ein- oder mehrlagigen Armierungsschicht mit eingelegtem Armierungsgewebe und einer ein- oder mehrlagigen Oberputzschicht angeordnet, so dass das Putzsystem mindestens drei Schichten umfasst. Die aus der erfindungsgemäßen Putzmasse ausgebildete Putzschicht ist ferner bevorzugt zweilagig aufgebaut, wobei in der unteren Lage ein weiteres Armierungsgewebe eingebettet sein kann. Ist dies der Fall, erfolgt vorzugsweise die Anordnung in der untergrundseitigen Hälfte der unteren Lage. Es können die üblichen/gängigen Armierungsgewebe verwendet werden, beispielsweise ein "4.5oz Mesh".

Bevorzugt weist die aus einer erfindungsgemäßen Putzmasse ausgebildete ein- oder mehrlagige Putzschicht eine Schichtstärke von 2,0-10,0 mm, vorzugsweise von 2,5-7,0 mm, weiterhin vorzugsweise von 3,0-6,0 mm, auf. Es können demnach für organisch gebundene Putzschichten vergleichsweise große Schichtstärken erreicht werden. Dies liegt darin begründet, dass vergleichsweise wenig Polymerbindemittel enthalten ist, so dass die Putzschicht schnell verfilmt bzw. trocknet.

Die Schichtstärke der aus der erfindungsgemäßen Putzmasse ausgebildeten ein- oder mehrlagigen Putzschicht ist vorzugsweise größer als die Schichtstärke der zementgebundenen Armierungsschicht, so dass die Elastizität der aus der erfindungsgemäßen Putzmasse ausgebildeten Putzschicht durch die darunter liegende steife Armierungsschicht nicht beeinträchtigt wird.

Anhand eines konkreten Ausführungsbeispiels werden nachfolgend die Vorteile der Erfindung aufgezeigt. Das Ausführungsbeispiel gibt eine erfindungsgemäße Putzmasse zur Ausbildung einer ein- oder mehrlagigen Putzschicht, insbesondere einer ein- oder mehrlagigen Armierungsschicht an.

Ausführungsbeispiel

| 5,5 | Gew.-% | Polymerbindemittel auf Reinacrylat-Basis (Feststoff) |
| 11,0 | Gew.-% | Marmor- und Quarzsand (D50 = ca. 1200 $\mu$m) |
| 22,0 | Gew.-% | Quarzsand (D50 = ca. 280 $\mu$m) |
| 1,5 | Gew.-% | Amorphes SiO2 (D50 = ca. 60 $\mu$m) |
| 20,0 | Gew.-% | Quarzmehl (D50 = ca. 50 $\mu$m) |
| 6,0 | Gew.-% | Talkum (D50 = ca. 50 $\mu$m) |
| 10,0 | Gew.-% | Aluminiumhydroxid (D50 = ca. 20 $\mu$m) |
| 0,3 | Gew.-% | Vernetzer |
| 3,0 | Gew.-% | weitere Additive |
| 20,7 | Gew.-% | Wasser |
| 100 | Gew.-% | |

Zur Herstellung einer erfindungsgemäßen Putzmasse wurden alle Ausgangsstoffe homogen gemischt. Die PVK der nach dem Ausführungsbeispiel hergestellten Putzmasse lag bei etwa 58%.

Anschließend wurde unter Verwendung der nach dem Ausführungsbeispiel hergestellten Putzmasse ein erfindungsgemäßes Putzsystem hergestellt. Hierzu wurde auf eine EPS-Platte zunächst eine 2,1 mm starke zementgebundene Armierungsschicht aufgebracht. Auf diese wurde eine weitere Armierungsschicht aus der erfindungsgemäßen Putzmasse aufgebracht, und zwar in zwei Lagen, wobei jede Lage 2,1 mm stark war. Auf die zweite Armierungsschicht folgte dann ein 1,5 mm starker Oberputz.

Das derart hergestellte Putzsystem wurde nach dem Trocknen einem Belastungstest unterzogen, dem sogenannten "Bird Strike Resistance Test". Bei diesem Test wird mit Hilfe einer Metallspitze, die den Schnabelschlag imitiert, mit einer definierten Kraft wiederholt auf die Putzschicht eingeschlagen. Anschließend wird die Putzschicht auf Schäden geprüft. Bei einem Eindringen der Metallspitze in die Putzschicht wird die Eindringtiefe erfasst und dokumentiert.

Bei dem am erfindungsgemäßen Putzsystem durchgeführten Belastungstest wurde zunächst mit einer Kraft von 22 N ($\pm$2 N) insgesamt 25.000-mal eingeschlagen. Die anschließende Prüfung auf Schäden ergab, dass die Metallspitze 3,1 mm tief in die Putzschicht eingedrungen ist.

Der gleiche Test wurde an einem Putzsystem durchgeführt, das anstelle der aus der erfindungsgemäßen Putzmasse hergestellten zweiten Armierungsschicht eine zweite Armierungsschicht aus einer herkömmlichen, organisch gebundenen Putzmasse umfasste und im Übrigen den gleichen Aufbau besaß. Bei diesem Putzsystem wurden die Putzschichten von der Metallspitze vollständig penetriert und zwar bereits nach 14.600 Schlägen.

Weitere Tests wurden mit einer Schlagkraft von 32 N ($\pm$2 N) und insgesamt 28.000 Wiederholungen durchgeführt. Bei dem Putzsystem, das eine zweite Armierungsschicht aus einer erfindungsgemäßen Putzmasse umfasste, wurde nach 28.000 Schlägen eine Eindringtiefe der Metallspitze von ca. 3,5 mm festgestellt. Die Putzschichten wurden demnach nicht vollständig penetriert.

Die Tests zeigen, dass ein erfindungsgemäßes Putzsystem eine deutlich höhere "Bird Strike Resistance" aufweist. Die Gefahr von Spechtlöchern ist demnach deutlich minimiert.

**Patentansprüche**

1. Putzmasse zur Ausbildung einer ein- oder mehrlagigen Putzschicht, insbesondere einer Armierungsschicht, enthaltend

   - mindestens ein Polymerbindemittel,
   - Füllstoffe,
   - Additive und
   - Wasser,

   **dadurch gekennzeichnet, dass** die Füllstoffe in einer mindestens trimodalen Teilchengrößenverteilung vorliegen, umfassend
   - mindestens einen Grobfüllstoff mit einer mittleren Teilchengröße D50 von 500-2000 $\mu$m, vorzugsweise 800-1800 $\mu$m, weiterhin vorzugsweise 1000-1600 $\mu$m,
   - mindestens einen Feinfüllstoff mit einer mittleren Teilchengröße D50 von 100-500 $\mu$m, vorzugsweise 150-450 $\mu$m, weiterhin vorzugsweise 180-400 $\mu$m und
   - mindestens einen Feinstfüllstoff mit einer mittleren Teilchengröße D50 von 5-99 $\mu$m, vorzugsweise 10-80 $\mu$m, weiterhin vorzugsweise 15-75 $\mu$m,
   wobei jeweils bezogen auf das Gesamtgewicht der Ausgangsstoffe
   - 5-20 Gew.-%, vorzugsweise 6-18 Gew.-%, weiterhin vorzugsweise 7-15 Gew.-% des mindestens einen Grobfüllstoffs,
   - 15-30 Gew.-%, vorzugsweise 16-28 Gew.-%, weiterhin vorzugsweise 18-25 Gew.-% des mindestens einen Feinfüllstoffs und
   - 20-50 Gew.-%, vorzugsweise 25-45 Gew.-%, weiterhin vorzugsweise 28-40 Gew.-% des mindestens einen Feinstfüllstoffs enthalten sind.

2. Putzmasse nach Anspruch 1,
   **dadurch gekennzeichnet, dass** bezogen auf das Gesamtgewicht der Ausgangsstoffe 3-15 Gew.-%, vorzugsweise 4-12 Gew.-%, weiterhin vorzugsweise 4-10 Gew.-% des mindestens einen Polymerbindemittels enthalten sind.

3. Putzmasse nach Anspruch 1 oder 2,
   **dadurch gekennzeichnet, dass** das mindestens eine Polymerbindemittel eine Mindestfilmtemperatur von 0 bis 20°C und/oder eine Glasübergangstemperatur von 5 bis 15°C aufweist.

4. Putzmasse nach einem der vorhergehenden Ansprüche,
   **dadurch gekennzeichnet, dass** die Füllstoffe mindestens einen silikatischen und/oder karbonatischen Füllstoff, wie beispielsweise Quarz, Cristobalit, Calcit, Marmor und/oder Dolomit, enthalten.

5. Putzmasse nach einem der vorhergehenden Ansprüche,
   **dadurch gekennzeichnet, dass** der mindestens eine Feinfüllstoff eine Mohs-Härte von mindestens 5, vorzugsweise von mindestens 6, weiterhin vorzugsweise von mindestens 6,5 aufweist.

6. Putzmasse nach einem der vorhergehenden Ansprüche,
   **dadurch gekennzeichnet, dass** ein erster Grobfüllstoff mit einer Mohs-Härte von maximal 5, vorzugsweise von maximal 4, weiterhin vorzugsweise von maximal 3, sowie ein zweiter Grobfüllstoff mit einer Mohs-Härte von mindestens 5, vorzugsweise von mindestens 6, weiterhin vorzugsweise von mindestens 6,5 enthalten sind, wobei der Gewichtsanteil des ersten Grobfüllstoffs größer als der Gewichtsanteil des zweiten Grobfüllstoffs ist.

7. Putzmasse nach einem der vorhergehenden Ansprüche,
   **dadurch gekennzeichnet, dass** ein erster Feinstfüllstoff mit einer Mohs-Härte von maximal 5, vorzugsweise von maximal 4, weiterhin vorzugsweise von maximal 3, sowie ein zweiter Feinstfüllstoff mit einer Mohs-Härte von mindestens 5, vorzugsweise von mindestens 6, weiterhin vorzugsweise von mindestens 6,5 enthalten sind, wobei der Gewichtsanteil des ersten Feinstfüllstoffs kleiner als der Gewichtsanteil des zweiten Feinstfüllstoffs ist.

8. Putzmasse nach einem der vorhergehenden Ansprüche,
   **dadurch gekennzeichnet, dass** der mindestens eine Feinstfüllstoff oxidische und/oder hydroxydische Feinstfüllstoffe, beispielsweise Aluminiumhydroxid, enthält.

9. Putzmasse nach einem der vorhergehenden Ansprüche,

**dadurch gekennzeichnet, dass** die Additive mindestens einen Vernetzer enthalten, vorzugsweise einen Vernetzer auf Silan-Basis, insbesondere auf Polysiloxan-Basis.

10. Putzmasse nach einem der vorhergehenden Ansprüche,
    **dadurch gekennzeichnet, dass**

|  |  |
|---|---|
| 3,0-15,0 Gew.-% | mindestens eines Polymerbindemittels (Feststoff) |
| 5,0-20,0 Gew.-% | mindestens eines Grobfüllstoffs |
| 15,0-30,0 Gew.-% | mindestens eines Feinfüllstoffs |
| 20,0-50,0 Gew.-% | mindestens eines Feinstfüllstoffs |
| 10,0-30,0 Gew.-% | Wasser |
| 0-1,0 Gew.-% | Vernetzer |
| 0,1-10,0 Gew.-% | weitere Additive |

jeweils bezogen auf das Gesamtgewicht der Ausgangsstoffe enthalten sind.

11. Ein- oder mehrlagige Putzschicht, insbesondere Armierungsschicht, aus einer Putzmasse nach einem der vorhergehenden Ansprüche.

12. Putzsystem, umfassend eine aus einer Putzmasse nach einem der Ansprüche 1 bis 10 ausgebildete ein- oder mehrlagige Putzschicht, insbesondere Armierungsschicht, sowie mindestens eine weitere Putzschicht, vorzugsweise eine Oberputzschicht und/oder eine weitere Armierungsschicht, wobei die weitere Armierungsschicht zementgebunden ist.

13. Putzsystem nach Anspruch 12,
    **dadurch gekennzeichnet, dass** die aus einer Putzmasse nach einem der Ansprüche 1 bis 10 ausgebildete Putzschicht zwischen einer zementgebundenen, ein- oder mehrlagigen Armierungsschicht mit eingelegtem Armierungsgewebe und einer ein- oder mehrlagigen Oberputzschicht angeordnet ist.

14. Putzsystem nach Anspruch 12 oder 13,
    **dadurch gekennzeichnet, dass** die aus einer erfindungsgemäßen Putzmasse ausgebildete ein- oder mehrlagige Putzschicht eine Schichtstärke von 2,0-10,0 mm, vorzugsweise von 2,5-7,0 mm, weiterhin vorzugsweise von 3,0-6,0 mm, aufweist, wobei vorzugsweise die Schichtstärke größer als die Schichtstärke der zementgebundene Armierungsschicht ist.

Europäisches
Patentamt

European
Patent Office

Office européen
des brevets

# EUROPÄISCHER RECHERCHENBERICHT

**Nummer der Anmeldung**

EP 23 17 6136

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 60 2004 010235 T2 (LAFARGE PLATRES [FR]) 2. Oktober 2008 (2008-10-02) * das ganze Dokument * | 1-15 | INV. C04B20/00 C04B26/02 |
| A | HADDAD LUCIMAR DIAS DE OLIVEIRA ET AL: "Influence of particle shape and size distribution on coating mortar properties", JOURNAL OF MATERIALS RESEARCH AND TECHNOLOGY, Bd. 9, Nr. 4, 1. Juli 2020 (2020-07-01), Seiten 9299-9314, XP93096472, BR ISSN: 2238-7854, DOI: 10.1016/j.jmrt.2020.06.068 Gefunden im Internet: URL:https://www.sciencedirect.com/science/article/pii/S2238785420314691/pdfft?md5=c1e570502f7892f15e50ef8ee272a9d0&pid=1-s2.0-S2238785420314691-main.pdf> [gefunden am 2023-10-30] * das ganze Dokument * | 1-15 | |

**RECHERCHIERTE SACHGEBIETE (IPC)**

C04B

Der vorliegende Recherchenbericht wurde für alle Patentansprüche erstellt

| Recherchenort | Abschlußdatum der Recherche | Prüfer |
|---|---|---|
| München | 31. Oktober 2023 | Roesky, Rainer |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 17 6136

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

31-10-2023

| Im Recherchenbericht angeführtes Patentdokument | Datum der Veröffentlichung | Mitglied(er) der Patentfamilie | Datum der Veröffentlichung |
|---|---|---|---|
| DE 602004010235 T2 | 02-10-2008 | AU 2005251974 A1 | 22-12-2005 |
| | | CA 2565674 A1 | 22-12-2005 |
| | | CN 1950310 A | 18-04-2007 |
| | | DE 602004010235 T2 | 02-10-2008 |
| | | EP 1593659 A1 | 09-11-2005 |
| | | EP 1744996 A1 | 24-01-2007 |
| | | ES 2295797 T3 | 16-04-2008 |
| | | KR 20070005718 A | 10-01-2007 |
| | | PL 1593659 T3 | 31-03-2008 |
| | | PT 1593659 E | 14-02-2008 |
| | | US 2007232736 A1 | 04-10-2007 |
| | | WO 2005121040 A1 | 22-12-2005 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 602004010235 T2